# EUROPÄISCHE PATENTSCHRIFT

(11) **EP 1 123 794 B1**
(45) Veröffentlichungstag und Bekanntmachung des Hinweises auf die Patenterteilung: **19.05.2004**
(21) Anmeldenummer: 01101411.5
(22) Anmeldetag: 23.01.2001
(51) Int. Cl.: H01F 7/02, H02K 1/27

(54) **Hochgefülltes Kunststoffteil**
Resinous part with high rate of filling
Pièce en résine à haut taux de remplissage

(30) Priorität: 09.02.2000 DE 20002277 U
(43) Veröffentlichungstag der Anmeldung: 16.08.2001
(73) Patentinhaber: Max Baermann GmbH, 51429 Bergisch-Gladbach (DE)
(72) Erfinder: Heinrich, Alfred, Dipl.-Ing., 51429 Bergisch Gladbach (DE)
(74) Vertreter: Lippert, Stachow, Schmidt & Partner

(56) Entgegenhaltungen:
- EP-A- 0 647 851

## Beschreibung

Die Erfindung betrifft ein hochgefülltes Kunststoffteil, das mit einem Grundkörper verbunden ist.

Bei hochgefüllten Kunststoffteilen handelt es sich um Teile, bei denen ein Material in einer Kunststoffmatrix eingebettet ist. Als Einbettungsmaterial kommen zum Beispiel dauermagnetische Partikel zur Herstellung eines kunststoffgebundenen Dauermagneten, weichmagnetische Partikel, deren magnetische Eigenschaften sich durch die umgebenden elektromagnetischen Felder bestimmen, keramische Pulver, z. B. zur Herstellung von Dichtscheiben, sowie andere pulver- oder partikelförmige Materialien in Betracht. Derartige hochgefüllte Kunststoffteile werden meist durch Spritzgießverfahren hergestellt.

Da Klebeverbindungen den Sicherheitsanforderungen an die Befestigung des Kunststoffteils in vielen Fällen nicht genügen, wird das Kunststoffteil meist an den Grundkörper angespritzt. Bei wechselnder Wärmebelastung, insbesondere beim Erkalten des hochgefüllten Kunststoffs nach dem Anspritzen, treten Schrumpfspannungen auf, die im Verbindungsbereich zu Rissen im Kunststoffteil führen können. Diese können ein Abreißen des Kunststoffteils vom Grundkörper bewirken.

Dieses Problem tritt zum Beispiel bei kunststoffgebundenen Dauermagneten auf, die als Motor- oder Sensormagnete auf einer Welle zu befestigen sind. Hierzu wird der Grundkörper, auf den der kunststoffgebundene Dauermagnet befestigt ist, mit Presssitz auf der betreffenden Welle angeordnet. Die als Motoroder Sensormagnete eingesetzten Dauermagnete sind meist als Ring- oder Scheibenmagnete ausgebildet, die auf einem ebenfalls ring- oder buchsenförmigen Grundkörper befestigt sind.

Der Erfindung liegt die Aufgabe zugrunde, eine Verbindung zwischen einem hochgefüllten Kunststoffteil, z. B. einem kunststoffgebundenen Dauermagneten, und einem Grundkörper zu schaffen, die das Entstehen von Rissen im Kunststoffteil bei wechselnder Wärmebelastung vermeidet.

Die Aufgabe wird erfindungsgemäß dadurch gelöst, dass ein hochgefülltes Kunststoffteil der eingangs genannten Art nicht unmittelbar, sondern über mindestens ein Zwischenelement aus elastischem Material an dem Grundkörper befestigt ist, wobei das Zwischenelement mit mindestens einem Vorsprung in eine Nut oder Öffnung des Kunststoffteils kraft- und/oder formschlüssig eingreift.

Aufgrund der erfindungsgemäßen Maßnahme nimmt das Zwischenelement insbesondere im Bereich seines Vorsprungs oder der Vorsprünge Schrumpfspannungen des hochgefüllten Kunststoffs bei wechselnder Wärmebelastung zum größten Teil auf, so dass Risse im Kunststoffteil vermieden werden können. Die Anforderungen an das Zwischenelement zur Vermeidung von Rissen können in Abhängigkeit von der Ausbildung des hochgefüllten Kunststoffteils und des Grundkörpers durch die Wahl der Geometrie der Vorsprünge und des elastischen Materials in weiten Bereichen variiert werden.

Das Zwischenelement besteht vorzugsweise aus Kunststoff, dessen Zusammensetzung und Shore-Härte den physikalischen Eigenschaften des hochgefüllten Kunststoffteils angepasst sind, so dass Schrumpfspannungen durch den bzw. die Vorsprünge des Zwischenelements zur Vermeidung von Rissbildungen aufgenommen werden können.

Die Erfindung eignet sich insbesondere für den Fall, dass das hochgefüllte Kunststoffteil, z. B. als Motormagnet oder Sensormagnet, ring- oder scheibenförmig ausgebildet ist und das Zwischenelement zumindest teilweise an einer seiner Stirnseiten angeordnet ist, wobei der Vorsprung in eine Nut oder Öffnung an dieser Stirnseite eingebettet ist.

Der Grundkörper, der als metallischer Trägerkörper ausgebildet sein kann, besteht in diesem Fall vorzugsweise aus einem buchsenförmigen Teil zur Befestigung des Magneten an einer Welle und einem sich nach außen erstreckenden Flanschteil, an dem das Zwischenelement oder die Zwischenelemente angebracht sind.

Die erfindungsgemäße Anordnung des oder der Zwischenelemente zwischen dem hochgefüllten Kunststoffteil und dem Grundkörper hat weiterhin den Vorteil, dass Schwingungen, wie sie durch den Grundkörper in das hochgefüllte Kunststoffteil eingeleitet werden können, reduziert werden, durch Wärmeausdehnung oder nicht homogen eingeleitete Kräfte erzeugte mechanische Spannungen abgebaut werden können und eine thermische oder elektrische Isolation zwischen Grundkörper und hochgefülltem Kunststoffteil hergestellt werden kann.

Der zuletzt genannte Vorteil liegt insbesondere dann vor, wenn das Zwischenelement ebenfalls ring- oder scheibenförmig ausgebildet und zwischen dem ringförmigen Flanschteil des Grundkörpers und dem ring- oder scheibenförmigen hochgefüllten Kunststoffteil angeordnet ist.

In einer besonderen Ausführung der Erfindung ist das Zwischenelement auf das Flanschteil des Grundkörpers aufgespritzt, wobei es durch Laschen oder Öffnungen des Flanschteils gehalten ist. Die so hergestellte Einheit wird dann in ein Werkzeug eingelegt und der hochgefüllte Kunststoff auf das Zwischenelement aufgespritzt oder aufgepresst.

In einer anderen Ausführung kann auch zunächst der hochgefüllte Kunststoff auf das Zwischenelement aufgespritzt oder aufgepresst werden. Das Zwischenelement wird anschließend am Flanschteil des Grundkörpers form- oder kraftschlüssig befestigt.

Dazu kann das Zwischenelement Vorsprünge aufweisen, die durch Öffnungen im Flanschteil des Grundkörpers hindurchgreifen und eine Nietverbindung herstellen, indem z. B. die aus dem Flanschteil herausragenden Enden der Vorsprünge mittels Ultraschall oder Heißprägen zu einem Nietkopf geformt werden.

Auch kann das Zwischenelement an der zum Flanschteil des Grundkörpers weisenden Stirnseite durch entsprechende Öffnungen im Flanschteil greifende Vorsprünge aufweisen, die eine Klippverbindung mit dem Grundkörper bilden.

In einer anderen Ausführung kann der Grundkörper in Form einer zylindrischen Buchse ausgebildet sein, wobei das Zwischenelement ein radial zum Grundkörper angeordnetes buchsenförmiges Teil und an dessen einer Stirnseite ein sich nach außen erstreckendes Flanschteil aufweist, an dem das hochgefüllte Kunststoffteil befestigt ist.

Zur Befestigung weist der Grundkörper vorzugsweise radiale Öffnungen auf, wobei das elastische Material des Zwischenelements beim Aufspritzen desselben auf den Grundkörper in die Öffnungen eingreift.

Ebenso kann der Grundkörper an der zum buchsenförmigen Teil des Zwischenelements weisenden Seite eine umlaufende Nut oder Vertiefungen aufweisen, in die das elastische Material des Zwischenelements beim Aufspritzen auf den Grundkörper eingreift.

Obwohl die Erfindung insbesondere zur Befestigung von ringoder scheibenförmigen Kunststoffteilen, wie z. B. kunststoffgebundenen Dauermagneten, an einem entsprechend buchsenförmig ausgebildeten Grundkörper geeignet ist, kann sie jedoch für beliebige hochgefüllte Kunststoffteile der eingangs genannten Art, die an einem Grundkörper befestigt sind, eingesetzt werden.

Bei kunststoffgebundenen Dauermagneten kann es sich dabei um isotrope oder anisotrope Magnete handeln. Diese können als Binder für die eingebetteten Dauermagnetpartikel thermoplastische oder auch duroplastische Kunststoffe aufweisen.

Der Grundkörper kann einstückig ausgebildet sein. Er besteht vorzugsweise aus Metall oder Kunststoff.

Der Grundkörper kann als Stanzbiegeteil, Drehteil oder in Fügetechnik hergestellt werden.

Bevorzugte Ausführungsbeispiele der Erfindung werden im Folgenden anhand der Zeichnung näher beschrieben.

Die Zeichnungsfiguren 1 bis 14 zeigen jeweils in der Mitte einen Längsschnitt durch das betreffende Ausführungsbeispiel, links davon eine stirnseitige Ansicht des in der Mitte dargestellten Ausführungsbeispiels von rechts und rechts eine stirnseitige Ansicht des in der Mitte dargestellten Ausführungsbeispiels von links, jeweils zur Hälfte.

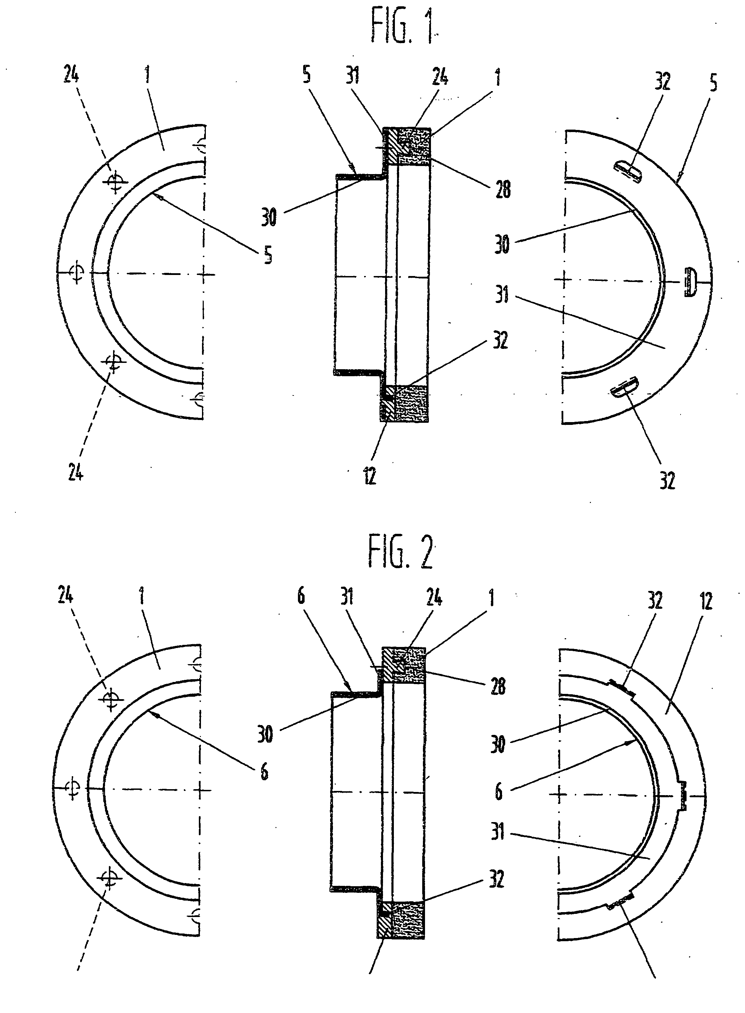

Bei den in Figuren 1 bis 13 dargestellten Ausführungsbeispielen handelt es sich bei den hochgefüllten Kunststoffteilen 1, 2, 3 und 4 um kunststoffgebundene Dauermagnete, die mit einem metallischen Grundkörper 5, 6, 7, 8, 9, 10 bzw. 11, der auf eine in der Zeichnung nicht dargestellte Welle aufgepresst wird, verbunden sind.

Wie weiterhin aus der Zeichnung hervorgeht, sind die hochgefüllten Kunststoffteile 1, 2, 3 und 4 über mindestens ein Zwischenelement 12, 13, 14, 15, 16, 17, 18, 19, 20, 21, 22 bzw. 23 aus elastischem Kunststoffmaterial an dem Grundkörper 5, 6, 7, 8, 9, 10 bzw. 11 befestigt, wobei das Zwischenelement mit mindestens einem Vorsprung 24, 25 bzw. 26 in eine Nut 27 oder Öffnung 28 bzw. 29 des hochgefüllten Kunststoffteils 1, 2, 3 bzw. 4 kraft- und/oder formschlüssig eingebettet ist. Die Zwischenelemente, insbesondere ihre Vorsprünge, sind geometrisch so gestaltet und das elastische Kunststoffmaterial so gewählt, dass bei wechselnder Wärmebelastung keine Risse im hochgefüllten Kunststoffteil entstehen.

Bei der in Fig. 1 gezeigten Einheit ist der Grundkörper 5 als metallisches Stanzbiegeteil mit einem buchsenförmigen Teil 30 zur Befestigung an einer in der Zeichnung nicht dargestellten Welle und einem sich nach außen erstreckenden Flanschteil 31 ausgebildet, an dessen vom buchsenförmigen Teil 30 abgewandten Stirnseite ein scheibenförmiges Zwischenelement 12 angespritzt ist. Das Flanschteil 31 weist etwa in seinem mittleren Bereich um den Umfang verteilte Laschen 32 auf, die zu der vom buchsenförmigen Teil 30 abgewandten Seite gebogen sind. Das scheibenförmige Zwischenelement 12 ist über die Laschen 32 mit dem Grundkörper 5 verbunden.

An der vom Grundkörper 5 abgewandten Stirnseite des scheibenförmigen Zwischenelements 12 sind über dessen Umfang verteilte Vorsprünge 24 angeformt, die zu ihrem freien Ende hin eine Verbreiterung aufweisen.

Das aus dem Grundkörper 5 und dem Zwischenelement 12 bestehende Teil wird zur Herstellung der gesamten Einheit in ein Werkzeug gelegt und der Magnetwerkstoff auf die die Vorsprünge 24 aufweisende Stirnseite des scheibenförmigen Zwischenelements 12 aufgespritzt oder aufgepresst. Durch die sich in den Magnetwerkstoff des Kunststoffteils 1 erstreckenden verbreiterten Vorsprünge 24 wird das Kunststoffteil 1 über das Zwischenelement 12 mit dem Grundkörper 5 fest verbunden.

Das Zwischenelement 12 bildet mit dem Kunststoffteil 1 ein hohlzylindrisches Teil, dessen Innendurchmesser größer als der Innendurchmesser des buchsenförmigen Teils 30 des Grundkörpers 5 ist. Der Außenradius dieses Teils schließt fluchtend mit dem Außenradius des Flanschteils 31 des Grundkörpers 5 ab.

Fig. 2 zeigt einen gegenüber der in Fig. 1 dargestellten Einheit etwas abgeänderten Grundkörper 6, dessen Flanschteil 31 sich radial nur über einen Teil des Zwischenelements 12 und des Kunststoffteils 1 erstreckt. Das Flanschteil 31 weist an seinem Außenrand zu der vom buchsenförmigen Teil 30 abgewandten Seite gebogene Laschen 32 auf, über die das Zwischenelement 12 mit dem Grundkörper 6 verbunden ist.

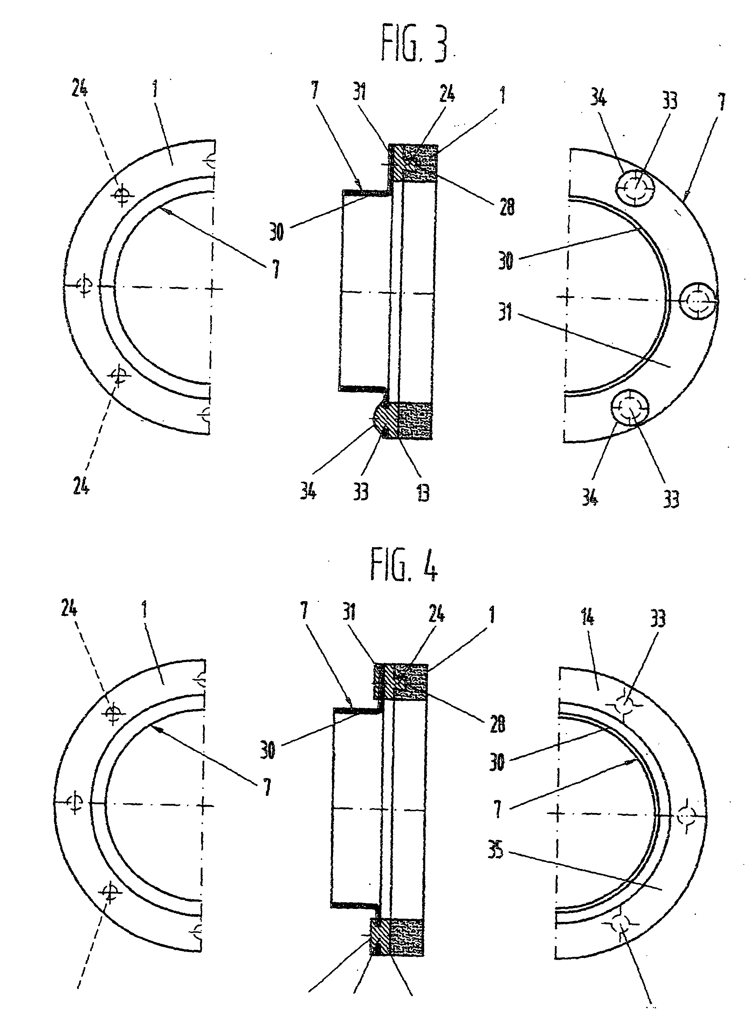

Bei der in Fig. 3 dargestellten Ausführung wurde zunächst der Magnetwerkstoff des Kunststoffteils 1 auf ein scheibenförmiges Zwischenelement 13 aufgespritzt. Die formschlüssige Verbindung zwischen dem Kunststoffteil 1 und dem Zwischenelement 13 wird wie bei den vorstehend beschriebenen Ausführungsbeispielen durch Vorsprünge 24 gebildet, die mit dem Magnetwerkstoff umspritzt werden, so dass sie in sich nach innen verbreiternde Öffnungen 28 im Kunststoffteil 1 greifen.

Das scheibenförmige Zwischenelement 13 weist an der vom Kunststoffteil 1 abgewandten Stirnseite um den Umfang verteilte zylinderförmige Erhebungen auf, die durch Öffnungen 33 im Flanschteil 31 des Grundkörpers 7 hindurchgreifen und die nach dem Zusammenfügen mit dem Grundkörper 7 mittels Ultraschall oder Heißprägen zu einem Nietkopf 34 umgeformt werden. Über diese Nietverbindungen ist das Kunststoffteil 1 am Grundkörper 7 über das Zwischenelement 13 befestigt.

Fig. 4 zeigt an Stelle der Nietverbindung eine andere Befestigungsmöglichkeit. Hier wurde wie in den Ausführungsbeispielen gemäß Fig. 1 und 2 ein scheibenförmiges Zwischenelement 14 auf den Grundkörper 7 aufgespritzt. Durch über den Umfang verteilte Öffnungen 33 im Flanschteil 31 des Grundkörpers 7 tritt die Kunststoffmasse des Zwischenelements 14 auf der Rückseite des Flanschteils 31 aus und bildet dort eine umlaufende ringförmige Befestigung 35. Danach wurde der Magnetwerkstoff des Kunststoffteils 1 auf das scheibenförmige Zwischenelement 14 aufgespritzt oder aufgepresst.

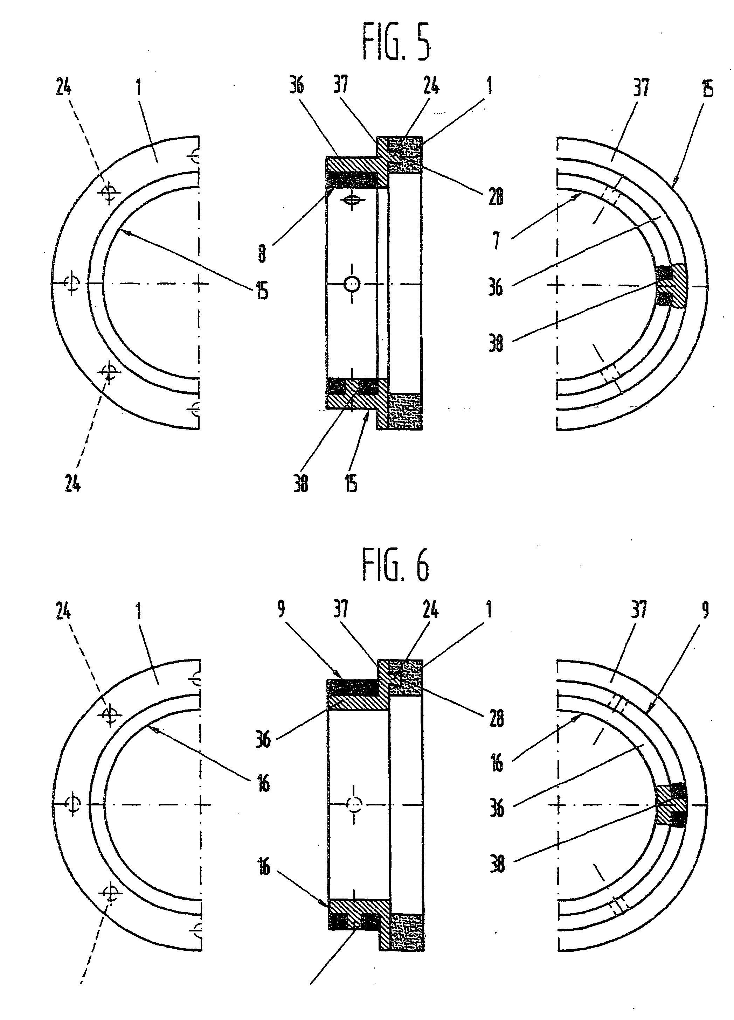

Bei den in den Figuren 5 bis 8 gezeigten Ausführungsbeispielen sind die Grundkörper 8, 9, 10 und 11 in Form einer zylindrischen Buchse ausgebildet. Die Zwischenelemente 15, 16, 17 bzw. 18 weisen ein radial zum Grundkörper angeordnetes buchsenförmiges Teil 36 und an dessen einer Stirnseite ein sich nach außen erstreckendes Flanschteil 37 auf, an den das Kunststoffteil 1 wie bei den vorstehend beschriebenen Ausführungsbeispielen befestigt ist.

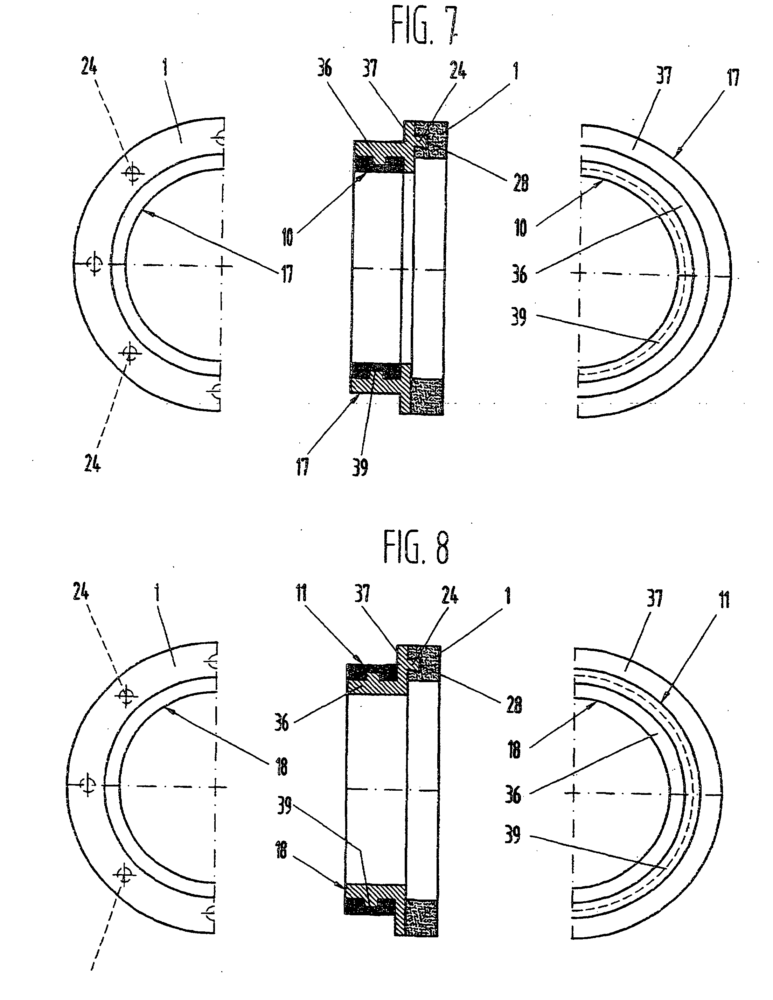

Die in den Figuren 5 und 7 gezeigten Einheiten können vorteilhaft auf eine in der Zeichnung nicht dargestellte Welle aufgepresst werden, wohingegen die in den Figuren 6 und 8 gezeigten Einheiten sich für eine Befestigung in einer in der Zeichnung nicht dargestellten Bohrung eignen.

Für die sichere Verbindung zwischen den Kunststoffteilen 1 und den in den Figuren 5 und 6 gezeigten Grundkörpern 8 und 9 sind in den Grundkörpern 8 und 9 radiale Öffnungen 38 vorgesehen, in die beim Anspritzen der Zwischenelemente 15 und 16 Kunststoffmaterial eindringt.

Bei den in den Figuren 7 und 8 gezeigten Ausführungsbeispielen sind an Stelle der Öffnungen umlaufende Nuten 39 an den zu den Zwischenelementen 17 und 18 weisenden Seiten der buchsenförmigen Grundkörper 10 bzw. 11 ausgebildet.

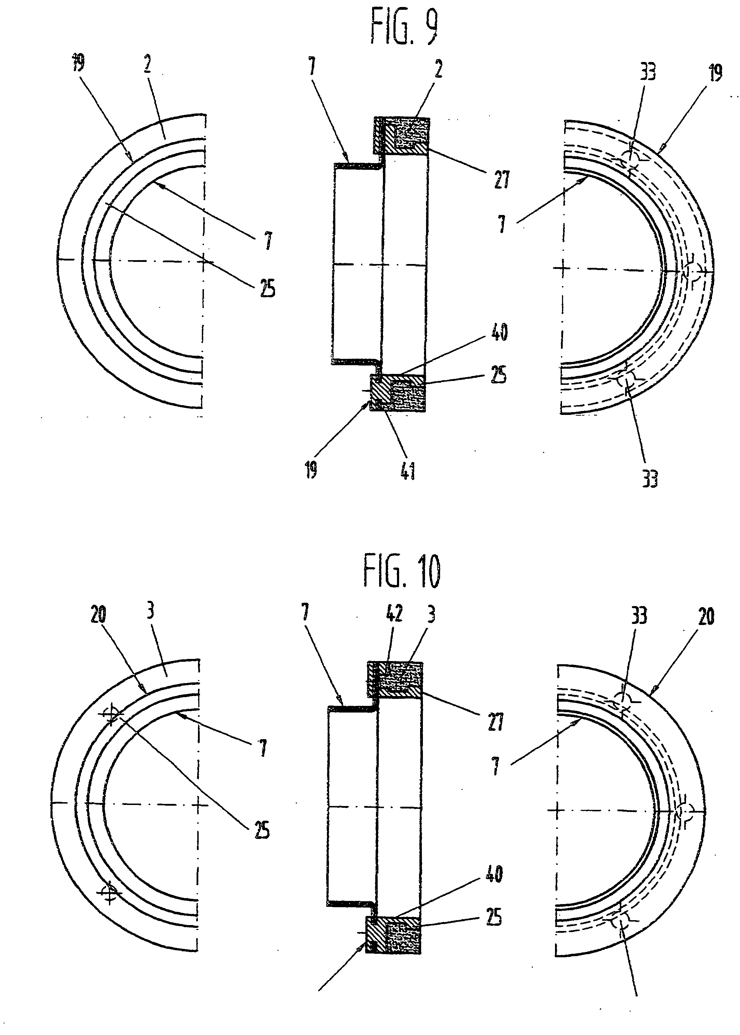

Die in den Figuren 9 und 10 dargestellten Auführungsbeispiele weisen als Grundkörper 7 wiederum metallische Stanzbiegeteile auf. Diese wurden mit den hochgefüllten Kunststoffteilen 2 bzw. 3 in ein Werkzeug eingelegt und in einem Arbeitsgang mit Kunststoff umspritzt, der die Zwischenelemente 19 bzw. 20 bildet.

Die Befestigung der Zwischenelemente 19 und 20 an den Grundkörpern 7 erfolgt wie bei dem in Fig. 4 gezeigten Ausführungsbeispiel. Die Zwischenelemente 19 und 20 umgreifen das hochgefüllte Kunststoffteil 2 bzw. 3 an der radial innenliegenden Seite mit einem ringförmigen Bereich 40, der an seinem vom Grundkörper 7 abgewandten Ende einen nach außen weisenden umlaufenden Vorsprung 25 aufweist. Der Vorsprung 25 hält das hochgefüllte Kunststoffteil 2 bzw. 3 am Grundkörper 7.

Zur Abstützung des hochgefüllten Kunststoffteils 2 am Grundkörper 7 ist bei dem in Fig. 9 dargestellten Ausführungsbeispiel ein umlaufender Bund 41 an der radialen Außenseite des Kunststoffteils 2 vorgesehen.

Bei dem in Fig. 10 gezeigten Ausführungsbeispiel dienen zur Abstützung des hochgefüllten Kunststoffteils 3 am Grundkörper 7 einige über den Umfang verteilte Erhebungen 42.

Die in den Figuren 9 und 10 gezeigte Einheit aus hochgefüllten Kunststoffteilen 2 und 3 und Zwischenelementen 19 bzw. 20 ist ebenfalls als Ring mit rechteckigem Radialschnitt ausgebildet, dessen Innendurchmesser größer ist als der Innendurchmesser des Grundkörpers 7.

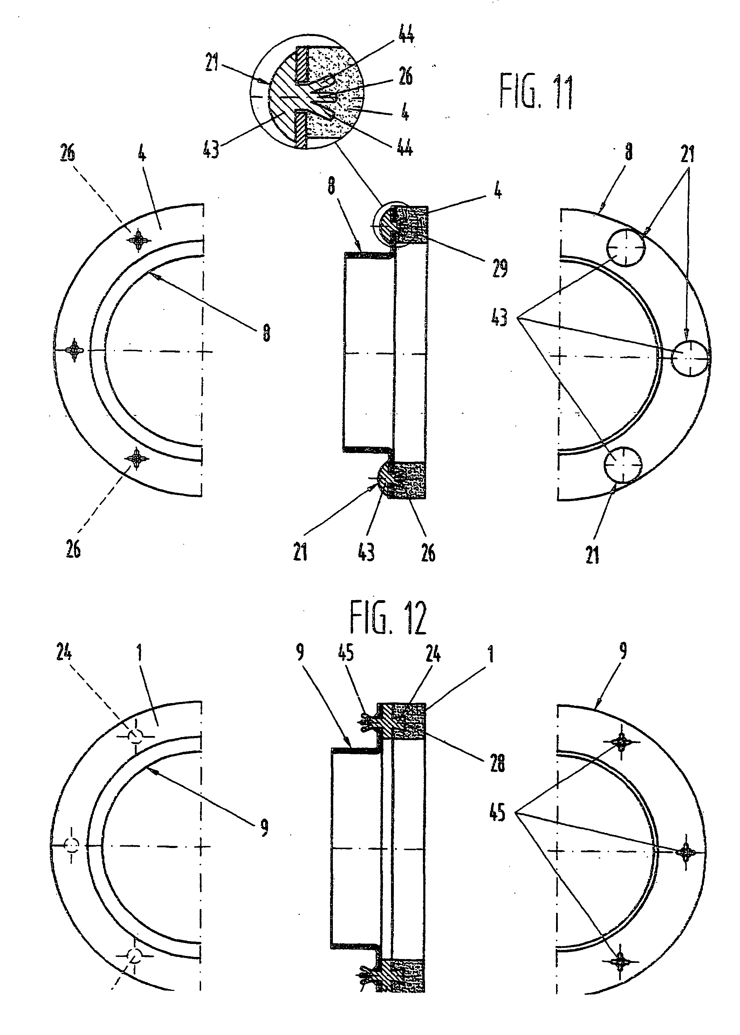

Figur 11 zeigt die Verbindung eines als Stanzbiegeteil ausgebildeten Grundkörpers 8 mit einem hochgefüllten Kunststoffteil 4 mit Hilfe mehrerer in Form von Stiften ausgebildeter Zwischenelementen 21. Die stiftförmigen Zwischenelemente 21 werden von der zum buchsenförmigen Teil des Grundkörpers 8 weisenden Seite in Öffnungen, die über den Umfang des Flanschteils des Grundkörpers 8 verteilt sind, eingesteckt. Sie liegen an der zum buchsenförmigen Teil weisenden Stirnseite des Flanschteils mit einem kalottenförmigen Kopf 43 an. An ihrem dem Kopf 43 gegenüberliegenden Ende weisen die stiftförmigen Zwischenelemente 21 sich zur Seite spreizende Teile 44 auf, die als Vorsprünge 26 zur Befestigung am Kunststoffteil 4 wirken. Die als Kunststoffklipse ausgebildeten Zwischenelemente 21 wurden vor dem Einlegen des Grundkörpers 8 in eine Spritz- oder Pressform in die Bohrungen am Flanschteil des Grundkörpers 8 eingesetzt. In einem nachfolgenden Arbeitsgang wurde der Magnetwerkstoff des Kunststoffteils 4 an die vom buchsenförmigen Teil abgewandte Stirnseite des Flanschteils des Grundkörpers 8 um die Vorsprünge 26 der stiftförmigen Zwischenelemente 21 herum angespritzt oder angepresst.

Figur 12 zeigt ein Ausführungsbeispiel mit einem scheibenförmigen Zwischenelement 22, an dessen mit den Vorsprüngen 28 versehenen Stirnseite der Magnetwerkstoff des Kunststoffteils 1 angespritzt oder aufgepresst wurde. An der gegenüberliegenden Stirnseite weist das Zwischenelement 22 über den Umfang verteilte als Klip-Verbindung dienende Vorsprünge 45 auf, die ähnlich zu den Vorsprüngen 26 der in Fig. 11 gezeigten Zwischenelemente 21 ausgebildet sind. Diese Vorsprünge 45 durchgreifen entsprechend über den Umfang verteilte Bohrungen im Flanschteil des Grundkörpers 9.

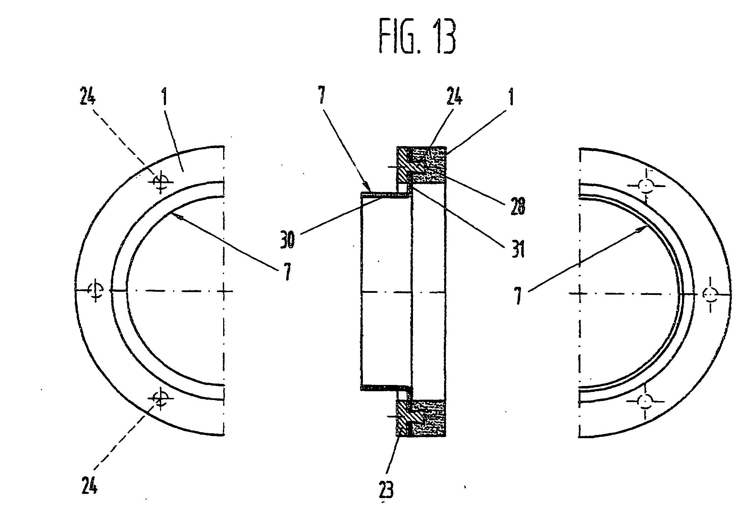

Bei dem in Fig. 13 gezeigten Ausführungsbeispiel wurde zunächst auf die zum buchsenförmigen Teil 30 des Grundkörpers 7 weisenden Stirnseite des Flanschteils 31 ein scheibenförmiges Zwischenelement 23 so aufgespritzt, dass durch über den Umfang des Flanschteils 31 verteilte Öffnungen 28 sich im Durchmesser erweiternde zylindrische Vorsprünge 24 entstehen. Auf die gegenüberliegende Stirnseite des Flanschteils 31 wurde dann in einem weiteren Arbeitsschritt der Magnetwerkstoff des Kunststoffteils 1 aufgespritzt oder aufgepresst.

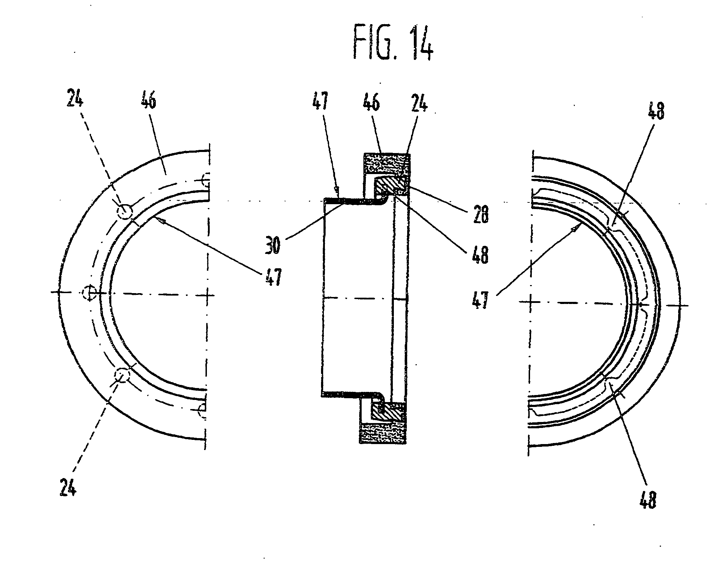

Aus Fig. 14 geht ein weiteres Ausführungsbeispiel hervor, bei dem der flanschartige Bereich des Grundkörpers 47 von außen ringförmig mit dem Kunststoff des Zwischenelements umspritzt wird. Die so entstandene Einheit wird in ein Werkzeug eingelegt, und der Magnetwerkstoff des Kunststoffteils 46 aufgespritzt oder aufgepresst. Die halbrunden Aussparungen 48 am äußeren Rand des flanschartigen Teils des Grundkörpers 47 dienen als radialer Verdrehschutz für das Kunststoffteil auf dem Grundkörper 47.

### Bezugszeichenliste

- 1 - 4: hochgefülltes Kunststoffteil
- 5 - 11: Grundkörper
- 12 - 23: Zwischenelement
- 24 - 26: Vorsprung
- 27: Nut
- 28 - 29: Öffnung
- 30: buchsenförmiges Teil
- 31: Flanschteil
- 32: Lasche
- 33: Öffnung
- 34: Nietkopf
- 35: Befestigung
- 36: buchsenförmiges Teil
- 37: Flanschteil
- 38: Öffnung
- 39: Nut
- 40: ringförmiger Bereich
- 41: Bund
- 42: Erhebung
- 43: Kopf
- 44: gespreizte Teile
- 45: Vorsprünge
- 46: hochgefülltes Kunststoffteil
- 47: Grundkörper
- 48: Ausnehmungen

## Patentansprüche

1. Hochgefülltes Kunststoffteil (1; 2; 3; 4; 46), das mit einem Grundkörper (5; 6; 7; 8; 9; 10; 11; 47) verbunden ist, **dadurch gekennzeichnet, dass** das Kunststoffteil (1; 2; 3; 4; 46) nicht unmittelbar, sondern über mindestens ein Zwischenelement (12; 13; 14; 15; 16; 17; 18; 19; 20; 21; 22; 23) aus elastischem Material an dem Grundkörper (5; 6; 7; 8; 9; 10; 11; 47) befestigt ist, wobei das Zwischenelement (12; 13; 14; 15; 16; 17; 18; 19; 20; 21; 22; 23) mit mindestens einem Vorsprung (24; 25; 26) in eine Nut (27) oder Öffnung (28; 29) des Kunststoffteils (1; 2; 3; 4; 46) kraft- und/oder formschlüssig eingebettet ist.

2. Hochgefülltes Kunststoffteil (1; 4; 46) nach Anspruch 1, **dadurch gekennzeichnet, dass** es ringoder scheibenförmig ausgebildet ist und das Zwischenelement (12; 13; 14; 15; 16; 17; 18; 21; 22; 23) zumindest teilweise an einer seiner Stirnseiten angeordnet ist, wobei der Vorsprung (24; 26) in eine Nut oder Öffnung (28, 29) an dieser Stirnseite eingreift.

3. Hochgefülltes Kunststoffteil nach Anspruch 1 oder 2, **dadurch gekennzeichnet, dass** das Zwischenelement (12; 13; 14; 15; 16; 17; 18; 22; 22; 23) ringoder scheibenförmig ausgebildet ist und der Grundkörper (5; 6; 7; 9; 47) ein buchsenförmiges Teil (30) zur Befestigung an einer Welle und ein sich nach außen erstrekkendes Flanschteil (31) aufweist, an dem das Zwischenelement (12; 13; 14; 15; 16; 17; 18; 22; 22; 23) angebracht ist.

4. Hochgefülltes Kunststoffteil nach Anspruch 3, **dadurch gekennzeichnet, dass** das Zwischenelement (12; 14; 23) auf das Flanschteil (31) des Grundkörpers (5; 6; 7; 47) aufgespritzt ist, wobei es durch Laschen (32) oder Öffnungen (33) des Flanschteils (31) gehalten ist, und das hochgefüllte Kunststoffteil (1) auf das Zwischenelement (12; 14; 23) aufgespritzt oder aufgepresst ist.

5. Hochgefülltes Kunststoffteil (1) nach Anspruch 3, **dadurch gekennzeichnet, dass** es auf das Zwischenelement (13; 22) aufgespritzt oder aufgepresst ist und das Zwischenelement (13) am Flanschteil (31) des Grundkörpers (7; 9) form- oder kraftschlüssig befestigt ist.

6. Hochgefülltes Kunststoffteil (1) nach Anspruch 5, **dadurch gekennzeichnet, dass** das Zwischenelement (13) Vorsprünge aufweist, die durch Öffnungen (33) im Flanschteil (31) des Grundkörpers (7) hindurchgreifen und deren aus dem Flanschteil (31) herausragenden Enden mittels Ultraschall oder Heißprägen zu einem Nietkopf (34) umgeformt sind.

7. Hochgefülltes Kunststoffteil (1) nach Anspruch 5, **dadurch gekennzeichnet, dass** das Zwischenelement (22) an der zum Flanschteil (31) weisenden Stirnseite durch entsprechende Öffnungen im Flanschteil (31) greifende Vorsprünge (45) aufweist, die eine Klipp-Verbindung mit dem Grundkörper (9) bilden.

8. Hochgefülltes Kunststoffteil (2; 3) nach Anspruch 1 oder 2, **dadurch gekennzeichnet, dass** es zusammen mit dem Grundkörper (7) von dem Material des Zwischenelements (19, 20) umspritzt ist.

9. Hochgefülltes Kunststoffteil (4) nach Anspruch 1 oder 2, **dadurch gekennzeichnet, dass** der Grundkörper (8) ein buchsenförmiges Teil (30) zur Befestigung an einer Welle und ein sich nach außen erstreckendes Flanschteil (31) aufweist und mehrere Zwischenteile (21) vorgesehen sind, die, um den Umfang des Flanschteils (31) verteilt, eine Klipp-Verbindung mit dem Flanschteil (31) bilden, und auf die das Kunststoffteil (4) aufgespritzt oder aufgepresst ist.

10. Hochgefülltes Kunststoffteil (1) nach Anspruch 1 oder 2, **dadurch gekennzeichnet, dass** der Grundkörper (8; 9; 10; 11) in Form einer zylindrischen Buchse ausgebildet ist und das Zwischenelement (15; 16; 17; 18) ein radial zum Grundkörper (8; 9; 10; 11) angeordnetes buchsenförmiges Teil (36) und an dessen einer Stirnseite ein sich nach außen erstreckendes Flanschteil (37) aufweist, an dem das Kunststoffteil (1) befestigt ist.

11. Hochgefülltes Kunststoffteil (1) nach Anspruch 10, **dadurch gekennzeichnet, dass** der Grundkörper (8; 9) radiale Öffnungen (38) aufweist und das Zwischenelement (15; 16) an den Grundkörper (8; 9) angespritzt ist, wobei das Material des Zwischenelements (15; 16) in die Öffnungen (38) eingreift.

12. Hochgefülltes Kunststoffteil (1) nach Anspruch 10, **dadurch gekennzeichnet, dass** der Grundkörper (10; 11) an der zum buchsenförmigen Teil (36) des Zwischenelements (17; 18) weisenden Seite eine umlaufende Nut (39) oder Vertiefung aufweist und das Zwischenelement (17; 18) an den Grundkörper (10; 11) angespritzt ist, wobei das Material des Zwischenelements (17; 18) in die Nut (39) oder Vertiefung eingreift.

13. Hochgefülltes Kunststoffteil (1; 2; 3; 4) nach einem der Ansprüche 1 bis 12, dadurch gekennzeichn e t, dass der Grundkörper (5; 6; 7; 8; 9; 10; 11) aus Metall besteht.

14. Hochgefülltes Kunststoffteil nach einem der Ansprüche 1 bis 12, **dadurch gekennzeichnet, dass** der Grundkörper aus Kunststoff besteht.

15. Hochgefülltes Kunststoffteil nach einem der Ansprüche 1 bis 14, **dadurch gekennzeichnet, dass** es als kunststoffgebundener Dauermagnet ausgebildet ist.

## Claims

1. Plastic component with a high filling grade (1; 2; 3; 4; 46) which is connected to a basic body (5; 6; 7; 8; 9; 10; 11; 47) **characterized in that** the plastic component (1; 2; 3; 4; 46) is not fixed directly to the basic body (5; 6; 7; 8; 9; 10; 11; 47) but via at least one intermediary (12; 13; 14; 15; 16; 17; 18; 19; 20; 21; 22; 23) made of elastic material, with the intermediary (12; 13; 14; 15; 16; 17; 18; 19; 20; 21; 22; 23) being embedded by a frictional and/or positive connection with at least one projection (24; 25; 26) in a groove (27) or opening (28; 29) of the plastic component (1; 2; 3; 4; 46).

2. Plastic component with a high filling grade (1; 4; 46) according to claim 1, **characterized in that** it is designed in ring shape or disk shape and the intermediary (12; 13; 14; 15; 16; 17; 18; 21; 22; 23) is at least partly placed at one of its fronts, with the projection (24; 26) reaching into a groove (27) or opening (28; 29) at this front.

3. Plastic component with a high filling grade (1; 2; 3; 4; 46) according to claim 1 or 2, **characterized in that** the intermediary (12; 13; 14; 15; 16; 17; 18; 21; 22; 23) is designed in ring shape or disk shape and the basic body (5; 6; 7; 9; 47) is provided with a bush shaped part (30) for fixing to a shaft, and an outwardly extending flange part (31) to which the intermediary (12; 13; 14; 15; 16; 17; 18; 21; 22; 23) is fixed.

4. Plastic component with a high filling grade (1) according to claim 3, **characterized in that** the intermediary (12; 14; 23) is injection molded onto the flange part (31) of the basic body (5; 6; 7; 47), being held via butt straps (32) or openings (33) of the flange part (31), and the plastic component with a high filling grade (1) being injection molded or pressed onto the intermediary (12; 14; 23).

5. Plastic component with a high filling grade (1) according to claim 3, **characterized in that** it is injection molded or pressed onto the intermediary (13; 22) and the intermediary (13; 22) is fixed to the flange part (31) of the basic body (7; 9) by means of a frictional or positive connection.

6. Plastic component with a high filling grade (1) according to claim 5, **characterized in that** the intermediary (13) is provided with projections reaching through openings (33) in the flange part (31) of the basic body (7), with the ends projecting out of the flange part (31) being reshaped to a rivet head (34) by means of ultrasonic or hot stamping.

7. Plastic component with a high filling grade (1) according to claim 5, **characterized in that** through openings in the flange part (31) the intermediary (22) is provided with encompassing projections (45) at the front pointing towards the flange part (31) thus forming a clip joint with the basic body (9).

8. Plastic component with a high filling grade (2; 3) according to claim 1 or 2, **characterized in that** the material of the intermediary (19, 20) is injection molded around it together with the basic body (7).

9. Plastic component with a high filling grade (4) according to claim 1 or 2, **characterized in that** the basic body (8) is provided with a bush shaped part (3) for fixing to a shaft and an outwardly extending flange part (31), and that several intermediaries (21) are provided which are distributed along the circumference of the flange part (31) forming a clip joint with the flange part (31) and onto which the plastic component (4) is injection molded or pressed.

10. Plastic component with a high filling grade (1) according to claim 1 or 2, **characterized in that** the basic body (8; 9; 10; 11) is designed in the shape of a cylindrical bush and the intermediary (15; 16; 17; 18) is provided with a bush shaped part (36) which is arranged radially to the basic body (8; 9; 10; 11), and an outwardly extending flange part (37) at its front onto which the plastic component (1) is fixed.

11. Plastic component with a high filling grade (1) according to claim 10, **characterized in that** the basic body (8; 9) is provided with radial openings (38) and the intermediary (15; 16) is injection molded to the basic body (8; 9), with the material of the intermediary (15; 16) reaching into the openings (38).

12. Plastic component with a high filling grade (1) according to claim 10, **characterized in that** the basic body (10; 11) is provided with a circular running groove (39) or slot at the side pointing towards the bush shaped part (36) of the intermediary (17; 18) and the intermediary (17; 18) is injection molded to the basic body (10; 11), with the material of the intermediary (17; 18) reaching into the groove (39) or slot.

13. Plastic component with a high filling grade (1; 2; 3; 4; 46) according to one of the claims 1 through 12, **characterized in that** the basic body (5; 6; 7; 8; 9; 10; 11; 47) is made of metal.

14. Plastic component with a high filling grade according to one of the claims 1 through 12, **characterized in that** the basic body is made of plastics.

15. Plastic component with a high filling grade (1; 2; 3; 4; 46) according to one of the claims 1 through 14, **characterized in that** it is designed as a plastic bonded permanent magnet.

## Revendications

1. Pièce en résine à haut taux de remplissage (1; 2; 3; 4; 46), reliée à un corps de base (5; 6; 7; 8; 9; 10; 11; 47), **caractérisée en ce que** la pièce en résine (1; 2; 3; 4; 46) n'est pas fixée directement sur le corps de base (5; 6; 7; 8; 9; 10; 11; 47) mais au moyen d'au moins un élément intermédiaire (12; 13; 14; 15; 16; 17; 18; 19; 20; 21; 22; 23) en matériau élastique, l'élément intermédiaire (12; 13; 14; 15; 16; 17; 18; 19; 20; 21; 22; 23) étant enrobé avec au moins une partie saillante (24; 25; 26) dans une rainure (27) ou une ouverture (28; 29) de la pièce en résine (1; 2; 3; 4; 46) par adhérence ou par un assemblage à engagement positif.

2. Pièce en résine à haut taux de remplissage (1; 4; 46) selon la revendication 1, **caractérisée en ce qu'**elle est en forme d'anneau ou de disque et que l'élément intermédiaire (12; 13; 14; 15; 16; 17; 18; 21; 22; 23) est disposé au moins partiellement sur un de ses côtés frontaux, la partie saillante (24; 26) pénétrant dans une rainure ou ouverture (28; 29) de ce côté frontal.

3. Pièce en résine à haut taux de remplissage selon la revendication 1 ou 2, **caractérisée en ce que** l'élément intermédiaire (12; 13; 14; 15; 16; 17; 18; 21; 22; 23) est en forme d'anneau ou de disque et que le corps de base (5; 6; 7; 9; 47) présente une pièce en forme de douille (30) pour garantir la fixation sur un arbre et une pièce à bride (31) s'étendant vers l'extérieur sur laquelle l'élément intermédiaire (12; 13; 14; 15; 16; 17; 18; 21; 22; 23) est fixé.

4. Pièce en résine à haut taux de remplissage selon la revendication 3, **caractérisée en ce que** l'élément intermédiaire (12; 14; 23) est appliqué au pistolet sur la partie à bride (31) du corps de base (5; 6; 7; 47) étant maintenu par les attaches (32) ou ouvertures (33) de la pièce à bride (31) et que la pièce en résine à haut taux de remplissage (1) est appliquée au pistolet ou engagée par pression sur l'élément intermédiaire (12; 14; 23).

5. Pièce en résine à haut taux de remplissage (1) selon la revendication 3, **caractérisée en ce qu'**elle est appliqueée au pistolet ou engagée par pression sur l'élément intermédiaire (13; 22) et que l'élément intermédiaire (13) est fixé par adhérence ou par un assemblage à engagement positif sur la pièce à bride (31) du corps de base (7; 9).

6. Pièce en résine à haut taux de remplissage (1) selon la revendication 5, **caractérisée en ce que** l'élément intermédiaire (13) présente des parties saillantes qui pénètre par des ouvertures (33) dans la pièce à bride (31) du corps de base (7) et dont leurs extrémités sortant de la pièce à bride (31) deviennent une tête de rivet (34) au moyen d'ultrasons ou par estampage à chaud.

7. Pièce en résine à haut taux de remplissage (1) selon la revendication 5, **caractérisée en ce que** l'élément intermédiaire (22) présente des parties saillantes (45) sur le côté frontal orienté vers la pièce à bride (31) qui traversent les ouvertures correspondantes dans la pièce à bride (31) et qui forment un assemblage à clip avec le corps de base (9).

8. Pièce en résine à haut taux de remplissage (2; 3) selon la revendication 1 ou 2, **caractérisée en ce qu'**elle est moulée par injection avec le corps de base (7) en utilisant le matériau de l'élément intermédiaire (19, 20).

9. Pièce en résine à haut taux de remplissage (4) selon la revendication 1 ou 2, **caractérisée en ce que** le corps de base (8) présente une pièce en forme de douille (30) pour la fixation sur un arbre et une pièce à bride (31) s'étendant vers l'extérieur et que plusieurs pièces intermédiaires (21) réparties sur la circonférence de la pièce à bride (31) sont prévues pourformer un assemblage à clip avec la pièce à bride (31) et sur lesquelles la pièce en résine (4) est appliquée au pistolet ou engagée par pression.

10. Pièce en résine à haut taux de remplissage (1) selon la revendication 1 ou 2, **caractérisée en ce que** le corps de base (8; 9; 10; 11) est en forme d'une douille cylindrique et que l'élément intermédiaire (15; 16; 17; 18) présente une pièce en forme de douille (36) disposée de manière radiale par rapport au corps de base (8; 9; 10; 11) et une pièce en forme de bride (37) située sur l'un des côtés frontaux de l'élément intermédiare et s'étendant vers l'extérieur sur laquelle est fixée la pièce en résine (1).

11. Pièce en résine à haut taux de remplissage (1) selon la revendication 10, **caractérisée en ce que** le corps de base (8; 9) présente des ouvertures radiales (38) et que l'élément intermédiaire (15; 16) est injecté sur le corps de base (8; 9), le matériau de l'élément intermédiaire (15; 16) pénétrant dans les ouvertures (38).

12. Pièce en résine à haut taux de remplissage (1) selon la revendication 10, **caractérisée en ce que** le corps de base (10 ; 11) présente une rainure (39) ou une cavité circonférentielle sur le côté tourné vers la pièce en forme de douille (36) de l'élément intermédiaire (17; 18) et que l'élément intermédiaire (17; 18) est injecté sur le corps de base (10; 11), le matériau de l'élément intermédiaire (17; 18) pénétrant dans la rainure (39) ou la cavité.

13. Pièce en résine à haut taux de remplissage (1; 2; 3; 4) selon l'une quelconque des revendications 1 à 12, **caractérisée en ce que** le corps de base (5; 6; 7; 8 ; 9; 10; 11) est en métal.

14. Pièce en résine à haut taux de remplissage selon l'une quelconque des revendications 1 à 12, **caractérisée en ce que** le corps de base (5; 6; 7; 8; 9; 10; 11) est en plastique.

15. Pièce en résine à haut taux de remplissage selon l'une quelconque des revendications 1 à 14, **caractérisée en ce qu'**elle est formée comme un aimant permanent lié avec de la matière plastique.
